# EUROPEAN PATENT APPLICATION

(11) **EP 3 680 169 A1**
(43) Date of publication of application: **15.07.2020**
(21) Application number: 19215241.1
(22) Date of filing: 11.12.2019
(51) Int. Cl.: B64C 21/06

(54) **MEREDITH EFFECT BOUNDARY LAYER ENERGISATION SYSTEM**

(30) Priority: 10.01.2019 GB 201900340
(71) Applicant: Rolls-Royce plc, London N1 9FX (GB)
(72) Inventor: Razak, Ahmed, Derby, Derbyshire DE24 8BJ (GB)
(74) Representative: Rolls-Royce plc

(57) **Abstract**

An aircraft (101) including an aft-mounted boundary layer energisation system (102) is shown. The system comprises a nacelle arranged around a tailcone of the aircraft which thereby defines a duct, the duct having, in axial flow series, an intake, a heat exchanger, and a nozzle, and no turbomachinery therein, whereby the system energises a boundary layer of the aircraft by means of Meredith effect.

## Description

### TECHNICAL FIELD

This disclosure relates to boundary layer energisation systems for aircraft.

### BACKGROUND

Boundary layer ingestion (often abbreviated to BLI) is a technique that may be used to improve aircraft propulsive efficiency by reducing downstream wake and jet mixing losses. In practice a designer must try and exploit this benefit without adding excessive weight, drag or inefficiency into the aircraft or propulsion system.

Whist in theory the maximum benefit arises if all the aircraft's boundary layers are ingested, unless distributed propulsion is used it is only practicable to ingest the boundary layers which are most concentrated. On a conventional tube and wing aircraft this means ingesting the fuselage boundary layer only. Fuselage BLI is therefore considered the most likely embodiment of BLI for the next generation of aircraft. Typically, in straight and level flight at optimum lift-drag ratio the fuselage drag is responsible for around 20 to 25 percent of the total aircraft drag.

To date, all proposals for fuselage BLI have utilised one or more turbomachines to energise the boundary layer. However, this method of increasing the enthalpy of the boundary layer introduces significant mechanical and aerodynamic losses.

### SUMMARY

The invention is directed to boundary layer energisation systems for aircraft. In an aspect, there is provided an aircraft including an aft-mounted boundary layer energisation system, comprising a nacelle arranged around a tailcone of the aircraft which thereby defines a duct, the duct having, in axial flow series, an intake, a heat exchanger, and a nozzle, and no turbomachinery therein, whereby the system energises a boundary layer of the aircraft by means of Meredith effect.

Performing heat addition by the heat exchanger increases the enthalpy of the inlet flow into the duct, developing thrust, and so no turbomachinery and thus no moving parts are required.

In an embodiment, the heat exchanger forms part of a cooling loop of an environmental control system of the aircraft.

In an embodiment, the heat exchanger forms part of a cooling loop for an electrical generator located in the fuselage of the aircraft. In an embodiment, the electrical generator may be driven by a gas turbine engine, which may also form part of the cooling loop. For example, the oil system of the gas turbine engine may be cooled thereby. Alternatively, heat from the exhaust of the gas turbine may be used.

In an embodiment, the heat exchanger extends fully across the duct from the fuselage to the nacelle. In this way, all of the air that enters the intake flows through the heat exchanger. In an embodiment, the heat exchanger connects the nacelle to the fuselage. This may mean that the nacelle does not require any struts or other structure to support it.

In an embodiment, the nozzle is a convergent nozzle. This increases the efficacy of the Meredith effect.

### BRIEF DESCRIPTION OF THE DRAWINGS

Embodiments will now be described by way of example only with reference to the accompanying drawings, which are purely schematic and not to scale, and in which:
Figure 1 shows an aircraft comprising an aft-mounted boundary layer energisation system;
Figure 2 shows the boundary layer energisation system of Figure 1;
Figure 3 is a plot of intake and nozzle total-to-static pressure ratios with respect to inlet mass flow rate;
Figure 4 is a plot of intake efficiency with respect to inlet mass flow rate; and
Figure 5 is a plot of specific thrust for the operating points of Figure 4.

### DETAILED DESCRIPTION

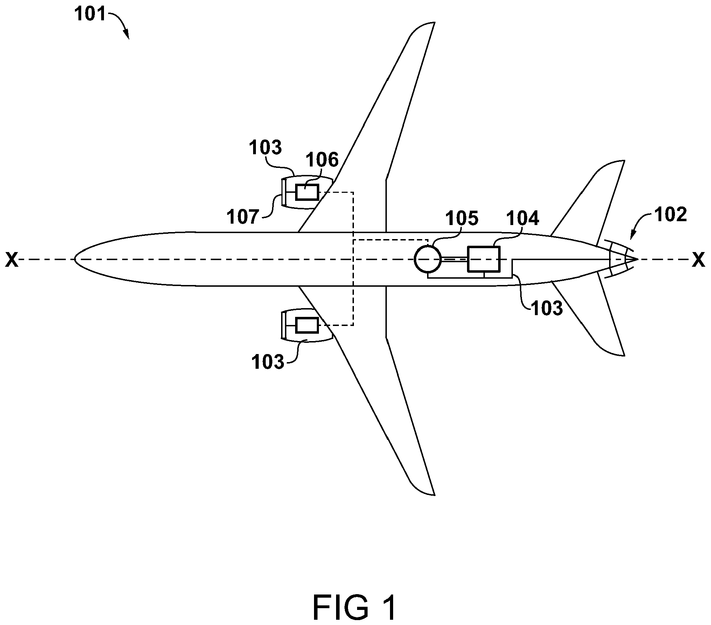

An aircraft 101 comprising an aft-mounted boundary layer energisation system 102 of the type set out previously is illustrated in Figure 1.

In the present embodiment, the aircraft 101 comprises two main under-wing propulsors 103 for the production of the majority of the requisite thrust for flight.

In the present example, the aircraft 101 further comprises an additional gas turbine engine 104 located in the fuselage. The gas turbine engine 104 is coupled to a generator 105.

In the present example, the propulsors 103 are configured as electric propulsors and thus comprise motors 106 which drive propulsive fans 107. Electrical power for the motors 106 is supplied by the generator 105.

As will be appreciated, whilst high levels of efficiency may be achieved by the gas turbine engine 104 and the generator 105, there is still a significant amount of waste heat which must be rejected from the machinery.

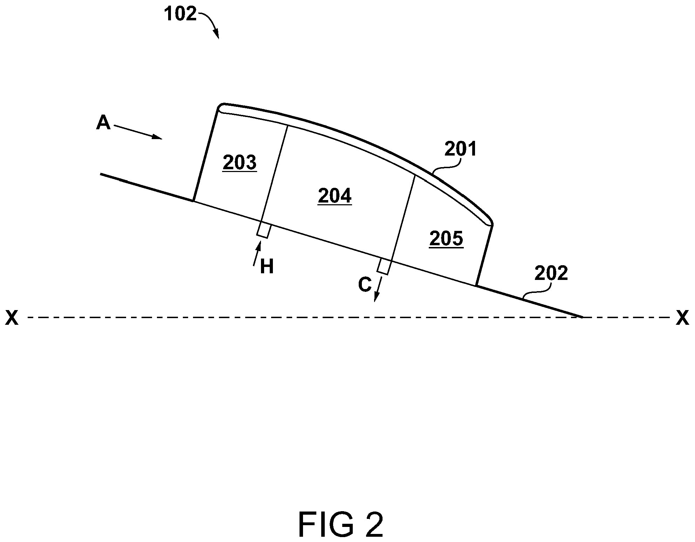

Thus, in the present embodiment the gas turbine engine 104 and the generator 105 form part of a cooling loop 108 along with the boundary layer energisation system 102. In the present example, heat rejected from the gas turbine engine 104 and the generator 105 is used to energise the boundary layer on the fuselage of the aircraft 101. This will be described further with reference to Figure 2.

In other embodiments, the source of heat may just be an electrical generator located in the fuselage, with the source of mechanical power to drive the electrical generator being cooled by other means.

Additionally or alternatively, the environmental control system (not shown) of the aircraft 101 may form part of the cooling loop 108 and reject heat via the heat exchanger in the boundary layer energisation system 102.

The boundary layer energisation system 102 is shown in more detail in Figure 2.

As described previously, the boundary layer energisation system 102 is composed of a nacelle 201 which is arranged around the tailcone 202 of the aircraft 102. In the present embodiment, the nacelle and tailcone are substantially axisymmetric around the centreline X-X of the aircraft, however it will be appreciated that in some other configurations the tailcone may have an upward boat-tail angle, for example.

The inner gas-washed surface of the nacelle 201 and the outer gas-washed surface of the tailcone 202 together form a duct. The duct comprises, in axial flow series, an inlet 203, a heat exchanger 204, and a nozzle 205. The duct contains no turbomachinery, which will be understood by those skilled in the art to refer to machines which transfer energy from a rotor to a fluid or vice versa. Instead, pressure rise is facilitated via heat exchange by the heat exchanger 204.

In the present embodiment, the heat exchanger 204 forms part of the cooling loop 108. As described previously, the cooling loop 108 may be for one or more of a generator 105, a gas turbine engine 104, or an environmental control system of the aircraft 101, for example.

In the present embodiment, the heat exchanger 204 occupies the full radial extent of the duct. This enables, in the present embodiment, the heat exchanger 204 mechanically connects the nacelle to the fuselage.

In flight, an airflow A enters the inlet 203 and enters one pass of the heat exchanger 204. Hot fluid H enters another pass of the heat exchanger 204, whereupon it gives up heat to the airflow A, and exits as a cold fluid C. The heated airflow A exits the heat exchanger 204 and is exhausted through the nozzle 205.

It will be understood that the boundary layer flow along the fuselage of the aircraft 101 therefore enters the boundary layer energisation system 102 whereupon its enthalpy is increased and thus its velocity is increased. Thus the boundary layer energisation system 102 decreases the wake deficit of the boundary layer by means of the Meredith effect. This is in contrast to prior boundary layer ingestion systems which utilise turbomachinery.

In the present example, heat addition is achieved by use of heat which must be rejected to the environment in any event.

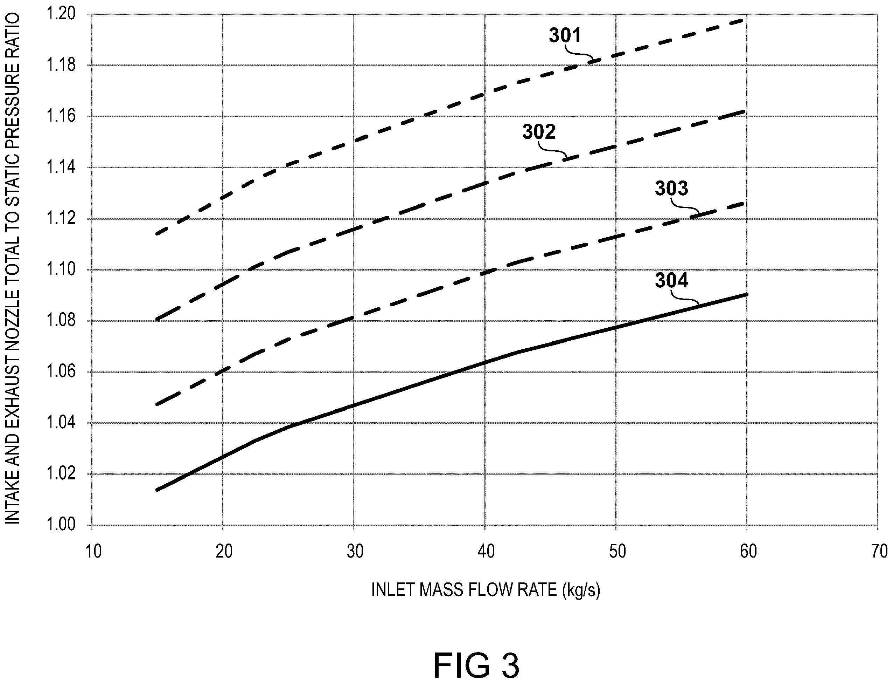

Figure 3 is a plot of the intake and nozzle total-to-static pressure ratios with respect to inlet mass flow rate. In the plot, line 301 is the inlet pressure ratio, line 302 is the nozzle pressure ratio for a heat exchanger with a pressure loss for the airflow A of 0.03, line 303 is the nozzle pressure ratio for a heat exchanger with a pressure loss for the airflow A of 0.06, and line 304 is the nozzle pressure ratio for a heat exchanger with a pressure loss for the airflow A of 0.09.

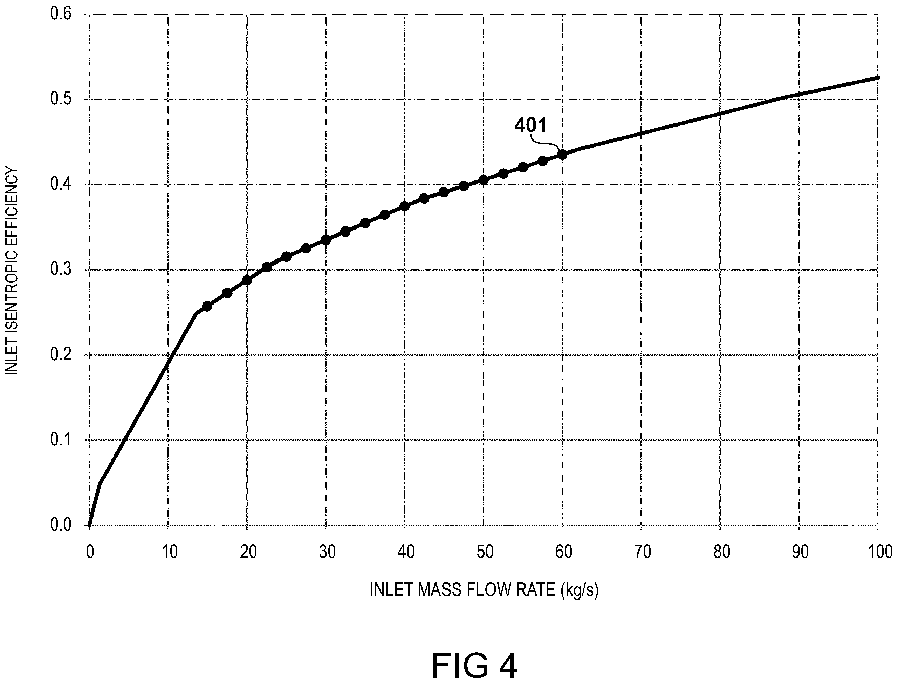

Figure 4 is a plot of intake efficiency with respect to inlet mass flow rate within the boundary layer. A set of operating points 401 are identified on the plot. The increase in pressure ratio with inlet mass flow rate seen in the plot of Figure 3 is due to the increase in inlet efficiency as the inlet airflow rate increases due to the increase in velocity in the boundary layer with boundary thickness.

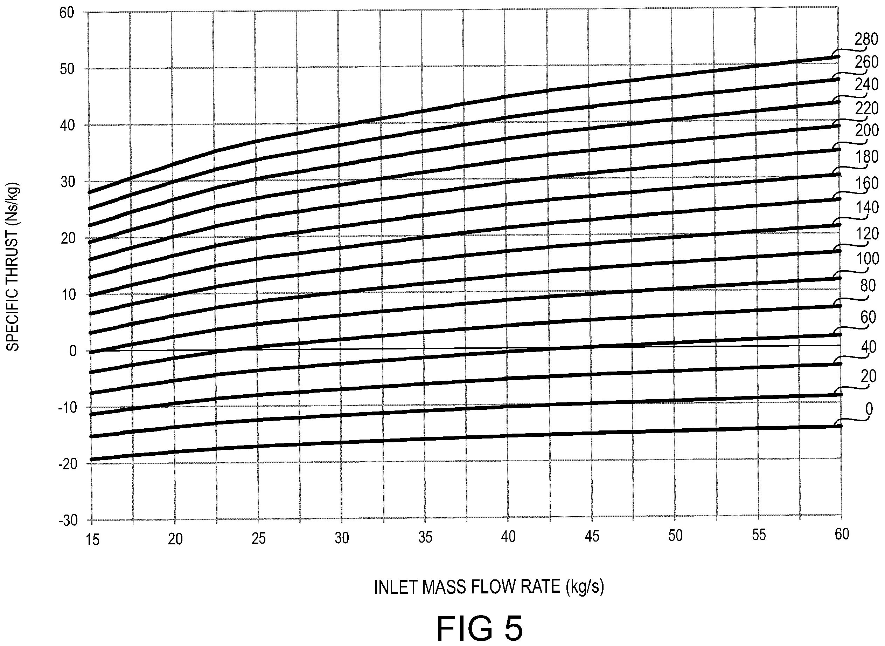

Figure 5 is a plot of specific thrust generated by the boundary layer energisation system 102 when the heat exchanger has a pressure loss of 0.03. Each line on the plot represents the specific thrust achieved at each operating point 401 for one of a number of different temperature deltas across the heat exchanger (i.e. difference in temperature between the temperature of fluids H and C). The reference numeral for each line on the plot identifies the temperature delta in kelvin.

In particular, it may be seen that a net thrust may be achieved at all operating points 401 when the temperature delta is 100 kelvin or greater.

The greater the pressure loss across the heat exchanger 204, the lower the thrust generated, thus all of the lines on the plot of Figure 5 will move downward to lower values of specific thrust with more lossy heat exchangers.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

## Claims

1. An aircraft including an aft-mounted boundary layer energisation system, comprising a nacelle arranged around a tailcone of the aircraft which thereby defines a duct, the duct having, in axial flow series, an intake, a heat exchanger, and a nozzle, and no turbomachinery therein, whereby the system energises a boundary layer of the aircraft by means of Meredith effect.

2. The aircraft of claim 1, in which the heat exchanger forms part of a cooling loop of an environmental control system of the aircraft.

3. The aircraft of claim 1, in which the heat exchanger forms part of a cooling loop for an electrical generator located in the fuselage of the aircraft.

4. The aircraft of claim 1, in which the electrical generator is driven by a gas turbine engine.

5. The aircraft of claim 1, in which the gas turbine engine also forms part of the cooling loop.

6. The aircraft of claim 1, in which the heat exchanger extends fully across the duct from the fuselage to the nacelle.

7. The aircraft of claim 1, in which the heat exchanger connects the nacelle to the fuselage.

8. The aircraft of claim 1, in which the nozzle is a convergent nozzle.
